# EUROPEAN PATENT APPLICATION

(11) **EP 4 227 760 A1**
(43) Date of publication of application: **16.08.2023**
(21) Application number: 21894896.6
(22) Date of filing: 18.10.2021
(51) Int. Cl.: G06F 1/16, G09F 9/30

(54) **ELECTRONIC DEVICE COMPRISING FLEXIBLE DISPLAY**

(30) Priority: 19.11.2020 KR 20200155995; 14.01.2021 KR 20210005342
(71) Applicant: Samsung Electronics Co., Ltd., Suwon-si, Gyeonggi-do 16677 (KR)
(72) Inventor: JUNG, Minsu, Suwon-si, Gyeonggi-do 16677 (KR)
(74) Representative: Gulde & Partner
(86) International application number: PCT/KR2021/014435
(87) International publication number: WO 2022/108124

(57) **Abstract**

According to various embodiments, an electronic device may comprise: a housing including an internal space; a slide structure to be slidably coupled to the housing along a first direction; a bendable member connected to the slide structure and disposed to at least partially face the housing; a flexible display disposed to be supported by at least a part of the slide structure and at least a part of the bendable member and moving together with the bendable member according to a sliding operation of the slide structure; and a display support structure which is disposed between the bendable member and the housing and comprises at least one magnetic member at least partially disposed at the bendable member and at least one magnetic force response member disposed at a position in the housing, the position allowing the response member to respond to the magnetic force of the magnetic member. The flexible display is at least partially accommodated in the internal space through at least a part of the bendable member in a slide-in state so as not to be seen from the outside, and the flexible display can maintain a state in which the magnetic member and the magnetic force response member are at least partially in contact with each other during a sliding operation. Various other embodiments may also be possible.

## Description

### [Technical Field]

Various embodiments of the disclosure relate to an electronic device including a flexible display.

### [Background Art]

Electronic devices are gradually becoming slimmer and are being improved to increase rigidity, to enhance design aspects, and to differentiate functional elements thereof. Electronic devices are being gradually transformed from a uniform rectangular shape into various shapes. An electronic device may have a transformable structure that is capable of using a large-screen display for the convenience of portability. For example, as part of a transformable structure, an electronic device may have a structure (e.g., a rollable structure) in which a display area is expanded through a housing coupling structure operating in a sliding manner and a flexible display supported by the housing coupling structure. Such an electronic device may require efficient space secured in a housing through a rolling structure of a flexible display in a slide-in state and/or a slide-out state.

### [Disclosure of Invention]

### [Technical Problem]

The electronic device may include a transformable slidable electronic device having a display area that is expandable when used (e.g., a rollable electronic device). A slidable electronic device may include a housing (e.g., a first housing, a base housing, or a base bracket) and a slide structure (e.g., a second housing) which may be coupled to be movable relative to each other by being at least partially fitted together. For example, the slide structure may change the display area of a flexible display by being slid in or slid out from the housing in a predetermined direction and by a predetermined reciprocating distance. The slide structure may be coupled to support at least a portion of the flexible display (or expandable display) and to at least partially operate in a sliding manner from the housing, and may cause the display area of the flexible display to be varied by being manually slid in or slid out by a user or by being automatically switched to the slide-in state or the slide-out state.

At the time of being switched to the slide-in state, the slidable electronic device may be operated in such a way as to accommodate at least a portion of the flexible display into the inner space of the housing, and at the time of being switched to the slide-out state, the slidable electronic device may be operated in such a way as to expose at least a portion of the flexible display to the external environment. The flexible display may perform a rotating (or rolling) operation in the inner space of the housing. In the process of rotating, at least a portion (e.g., a central area or a middle area) of the flexible display may be lifted from the support member. In the flexible display, it may be difficult to maintain the central area in a close contact state with the support member.

According to various embodiments of the disclosure, it is possible to provide an electronic device including a structure configured to prevent a lifting phenomenon of a flexible display.

According to various embodiments, it is possible to provide an electronic device including a structure configured to prevent a lifting phenomenon of a flexible display by disposing a magnetic force member (e.g., a magnetic force generating member) and a magnetic force response member, which generate an attraction relative to each other, in at least a portion of the central area of the flexible display.

### [Solution to Problem]

According to various embodiment, an electronic device may include a housing including an inner space, a slide structure coupled to the housing to be slidable along a first direction, a bendable member connected to the slide structure and disposed to at least partially face the housing, a flexible display disposed to be supported by at least a portion of the slide structure and at least a portion of the bendable member and configured to be moved together with the bendable member according to a sliding operation of the slide structure, and a display support structure disposed between the bendable member and the housing, wherein the display support member includes at least one magnetic force member disposed in at least a portion of the bendable member and at least one magnetic force response member disposed at a position in the housing where the magnetic force response member response to the magnetic force of the magnetic force member. In a slide-in state, the flexible display may be at least partially accommodated into the inner space not to be seen from outside through at least a portion of the bendable member, and during the sliding operation, the flexible display may maintain a state in which the magnetic force member and the magnetic force response member is at least partially in contact with each other.

According to various embodiment, an electronic device may include a housing including an inner space, a slide structure coupled to the housing to be slidable along a first direction, a bendable member connected to the slide structure and disposed to at least partially face the housing, a flexible display disposed to be supported by at least a portion of the slide structure and at least a portion of the bendable member and configured to be moved together with the bendable member according to a sliding operation of the slide structure, and a display support structure disposed between the bendable member and the housing, wherein the display support member includes at least one magnetic force member disposed in at least a portion of the bendable member, a multi-bar support member configured to at least partially cover the at least one magnetic force member, and at least one magnetic force response member disposed at a position in the housing where the magnetic force response member response to the magnetic force of the magnetic force member. In a slide-in state, the flexible display may be at least partially accommodated in the inner space not to be seen from outside through at least a portion of the bendable member, and during the sliding operation, the flexible display may maintain a state in which the magnetic force member and the magnetic force response member is at least partially in contact with each other.

### [Advantageous Effects of Invention]

An electronic device according to various embodiments of the disclosure is capable of including a structure that prevents a central area of the flexible display from being lifted while the flexible display rotates (or rolls). According to an embodiment, an electronic device includes a structure in which a magnetic force member (e.g., a magnetic force generating member) or a magnetic force response member is disposed on a bendable member that supports a flexible display. As a result, it is possible to minimize resistance to the rotating (or rolling) operation of the flexible display, and to prevent the lifting phenomenon of the central area of the flexible display.

### [Brief Description of Drawings]

In connection with the description of the drawings, the same or similar components may be denoted by the same or similar reference numerals.
FIG. 1 is a block diagram of an electronic device according to various embodiments in a network environment.
FIG. 2A is a front perspective view illustrating an electronic device according to various embodiments of the disclosure in a slide-in state.
FIG. 2B is a front perspective view illustrating the electronic device according to various embodiments of the disclosure in a slide-out state.
FIG. 3A is a rear perspective view of the electronic device according to various embodiments of the disclosure in the slide-in state.
FIG. 3B is a rear perspective view of the electronic device according to various embodiments of the disclosure in the slide-out state.
FIG. 3C is an exemplary view of a camera module including a plurality of cameras according to various embodiments of the disclosure.
FIG. 4A is a front perspective view of a slide structure according to various embodiments of the disclosure.
FIG. 4B is an exemplary view illustrating a process of assembling gears to perform a rolling operation of the slide structure according to various embodiments of the disclosure.
FIG. 4C is an exemplary view illustrating the front surface of the slide structure according to various embodiments of the disclosure.
FIG. 4D is an exemplary view illustrating the rear surface of the slide structure according to various embodiments of the disclosure.
FIG. 5A is an exemplary view illustrating a process of assembling a shaft bracket and a base bracket partially disposed on a slide structure according to various embodiments of the disclosure.
FIG. 5B is an exemplary diagram illustrating a process of assembling a base bracket, a printed circuit board, and a rear surface cover according to various embodiments of the disclosure.
FIG. 6A is an exemplary view illustrating magnetic force members disposed in a multi-bar structure included in a bendable member according to various embodiments of the disclosure.
FIG. 6B is an enlarged exemplary view illustrating magnetic force members disposed in a multi-bar structure according to various embodiments of the disclosure.
FIG. 6C is an enlarged exemplary view illustrating a magnetic force member disposed in a multi-bar unit according to various embodiments of the disclosure.
FIG. 7 is an exemplary view illustrating a manufacturing process performed in disposing a magnetic force member in a multi-bar unit according to various embodiments of the disclosure.
FIG. 8A is an exemplary view illustrating a multi-bar support member at least partially disposed on a bendable member according to various embodiments of the disclosure.
FIG. 8B is an exemplary view illustrating the front surface of a multi-bar support member disposed on a bendable member according to various embodiments of the disclosure.
FIG. 8C is a cross-sectional view taken along line A-A' in FIG. 8B according to various embodiments of the disclosure.
FIG. 8D is a cross-sectional view taken along line B-B' in FIG. 8B according to various embodiments of the disclosure.
FIG. 8E is a cross-sectional view taken along line C-C' in FIG. 8B according to various embodiments of the disclosure.
FIG. 9 is an exemplary views illustrating magnetic force response members at least partially disposed on a shaft bracket according to various embodiments of the disclosure.
FIG. 10 is a cross-sectional view of a slide structure illustrating a coupling structure between magnetic force response members disposed on a bendable member and magnetic force response members disposed on a shaft bracket according to various embodiments of the disclosure.
FIG. 11 is an exemplary view illustrating an operation in which magnetic force members are also rolled in response to a rolling operation of a bendable member according to various embodiments of the disclosure.

### [Mode for the Invention]

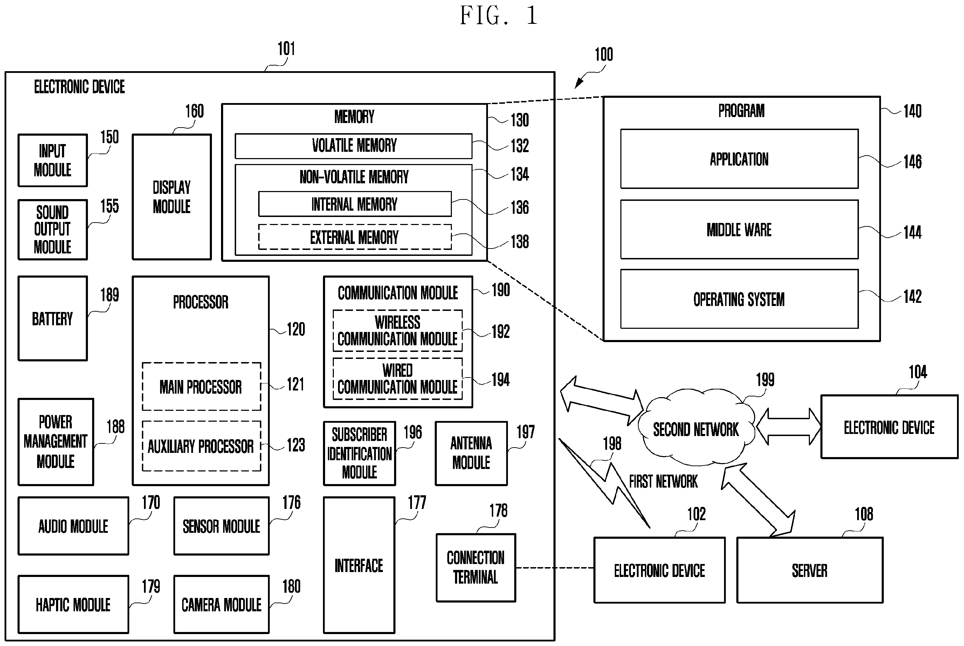

FIG. 1 illustrates an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, an audio output module 155, a display module 160, an audio module 170, a sensor module 176, an interface 177, a connecting terminal 178, a haptic module 179, a camera module 180, a power management module 188, a battery 189, a communication module 190, a subscriber identity module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 or external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record. The receiver may be used for receiving incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the audio output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes. The image signal processor (ISP) may at least partially control the plurality of cameras included in the camera module 180. For example, the camera module 180 may include at least one of a wide-angle camera, a telephoto camera, and/or an auto focus (AF) camera. A wide-angle camera may include a camera capable of photographing a wide range in a narrow place using a wide-angle lens, and a telephoto camera may include a camera capable of capturing a distant subject by using a telephoto lens. The AF camera may include a camera that automatically adjusts focus by measuring a distance to a subject. According to an embodiment, the electronic device 101 may capture a plurality of images using a plurality of cameras included in a camera module 180 under the control of an image signal processor, and display the plurality of images through the display module 160.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or a standard of the Infrared Data Association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. The antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

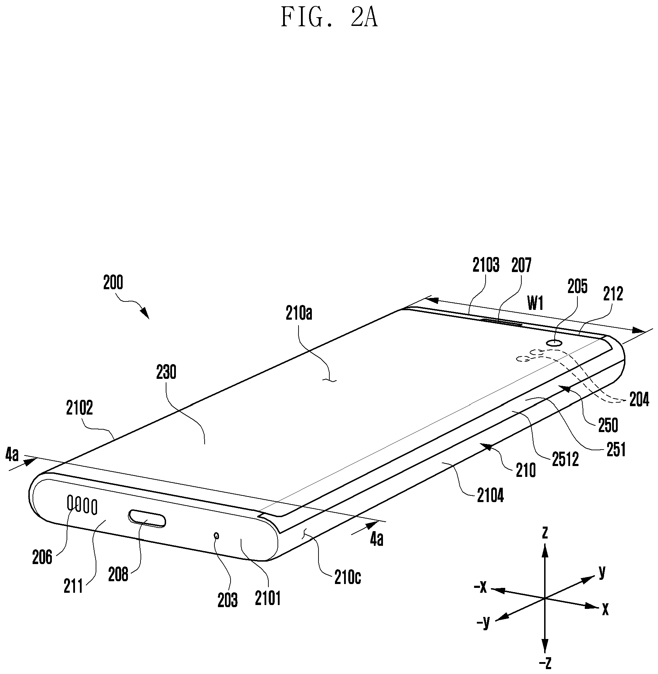

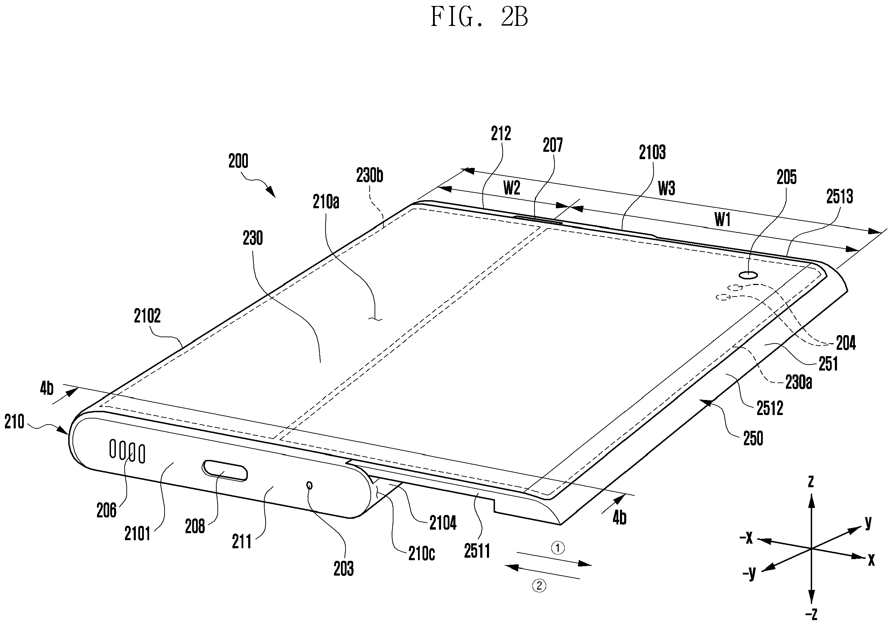

FIG. 2A is a front perspective view illustrating an electronic device according to various embodiments of the disclosure in a slide-in state. FIG. 2B is a front perspective view illustrating the electronic device according to various embodiments of the disclosure in a slide-out state.

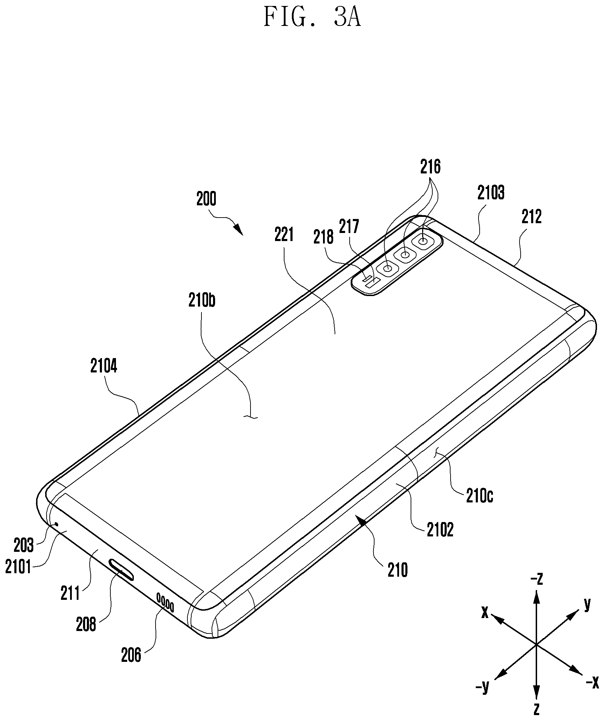

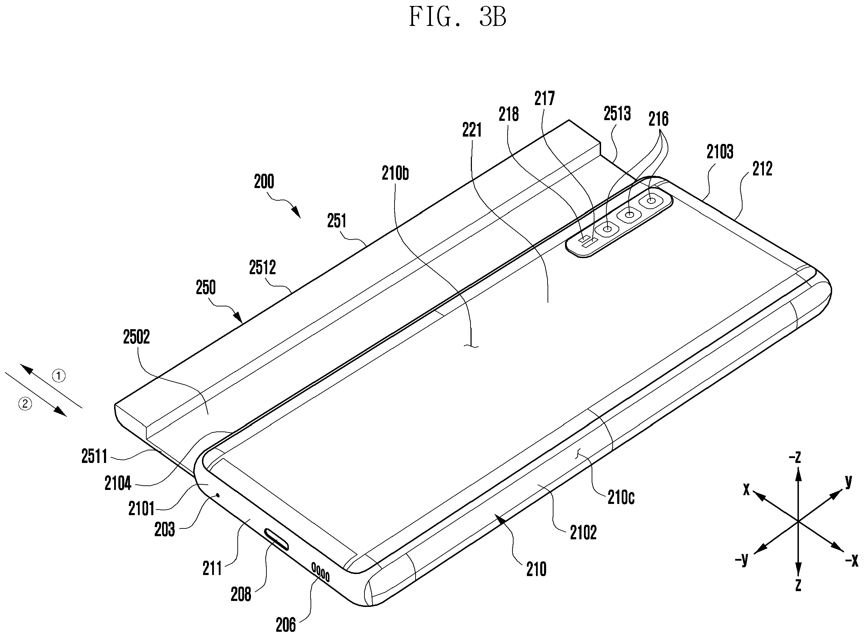

FIG. 3A is a rear perspective view of the electronic device according to various embodiments of the disclosure in the slide-in state. FIG. 3B is a rear perspective view of the electronic device according to various embodiments of the disclosure in the slide-out state.

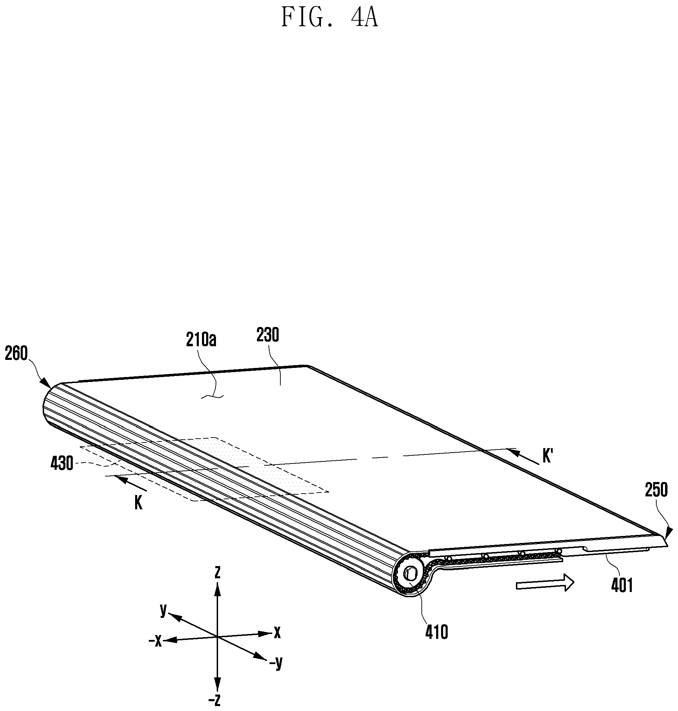

Referring to FIGS. 2A to 3B, an electronic device 200 (e.g., the electronic device 101 of FIG. 1) may include a housing 210 (e.g., a housing structure, a first housing, or a base housing), a slide structure 250 (e.g., a slide structure, a second housing, or a slide housing) coupled to be movable in a predetermined direction (e.g., the x-axis direction) and by a predetermined reciprocating distance from the housing 210, a bendable member or bendable support member (e.g., the bendable member 260 in FIG. 4A) (e.g., a hinge rail, a multi-bar assembly, and/or a multi-joint hinge module) coupled to one end of the slide structure 250 and accommodated in the inner space of the housing 210 through bending in a slide-in state, and a flexible display 230 (e.g., an expandable display) disposed to be supported by the slide structure 250 and the bendable member (e.g., the bendable member 260 of FIG. 4A). According to an embodiment, in the slide-in state, the flexible display 230 may be accommodated in the inner space of the housing 210 while being at least partially supported by the bendable member (e.g., the bendable member 260 of FIG. 4A ), and a partial area of the flexible display 230 that is accommodated in the inner space of the housing 210 may be disposed not to be seen from outside. According to an embodiment, in the slide-out state, the flexible display 230 may be disposed to be seen from outside while being supported by the bendable member (e.g., the bendable member 260 of FIG. 4A), which at least partially forms the same plane as the slide structure 250.

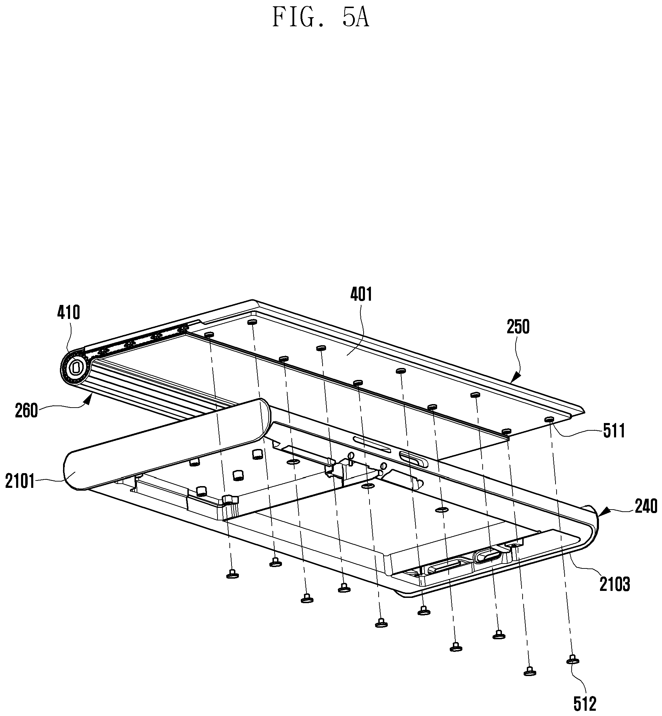

According to various embodiments, the electronic device 200 may include a housing 210 (e.g., a housing structure) that includes a front surface 210a (e.g., a first surface) facing a first direction (e.g., the z-axis direction), a rear surface 210b (e.g., a second surface) facing a second direction (e.g., the -z-axis direction) opposite to the first direction, and a side surface 210c surrounding the space between the front surface 210a and the rear surface 210b and at least partially exposed outside. According to an embodiment, the rear surface 210b may include a rear surface cover 221 configured as at least a portion of the housing 210. In some embodiments, the housing 210 may be configured with at least some of a base bracket (e.g., the base bracket 240 of FIG. 5A) disposed in the inner space of the electronic device 200 and configured to guide the slide structure 250, at least one side cover (e.g., the side surface covers 211 and 212 of FIG. 3A) coupled to at least a portion of the base bracket (e.g., the base bracket 240 of FIG. 5A), and a rear surface cover 221. According to an embodiment, the rear surface cover 221 may be made of, for example, polymer, coated or colored glass, ceramic, metal (e.g., aluminum, stainless steel (STS), or magnesium), or a combination of two or more of these materials. In some embodiments, the rear surface cover 221 may extend to at least a portion of the side surface 210c.

According to an embodiment, the side surface 210c may include a first side surface 2101 having a first length, a second side surface 2102 extending from the first side surface 210 in a direction perpendicular to the first side surface 210 and having a second length longer than the first length, a third side surface 2103 extending from the second side surface 2102 to be parallel to the first side surface 2101 and having the first length, and a fourth side surface 2104 extending from the third side surface 2103 to be parallel to the second side surface 2102 and having the second length. According to an embodiment, the slide structure 250 supports the flexible display 230 and may slide out from the second side surface 2102 toward the fourth side surface 2104 (e.g., the x-axis direction) to expand the display area of the flexible display 230, or slide in from the fourth side surface 2104 toward the second side surface 2102 (e.g. the -x-axis direction) to contract the display area of the flexible display 230. According to an embodiment, at least one of the side covers 211 and 212 may be disposed on the first side surface 2101 and the third side surface 2103.

According to various embodiments, the electronic device 200 may include a flexible display 230 disposed to be supported by the slide structure 250. According to an embodiment, the flexible display 230 may include a first area 230a (e.g., a flat portion) supported by the slide structure 250, and a second area 230b (e.g., a bendable portion) extending from the first area 230a and supported by the bendable member (e.g., the bendable member 260 of FIG. 4A). According to an embodiment, when the electronic device 200 is in the slide-in state, the second area 230b of the flexible display 230 may be slid into the inner space of the housing 210 and disposed not to be exposed outside, and when the electronic device200 is in the slide-out state, the second area 230b may be exposed outside by extending from the first area 231 while being supported by the bendable member (e.g., the bendable member 260 of FIG. 4A). Therefore, the electronic device 200 may include a rollable type electronic device and/or a slidable type electronic device in which the display area of the flexible display 230 changes depending on the movement of the slide structure 250 from the housing 210. According to an embodiment, the electronic device 200 may divide the display area of the flexible display 230 into a first area 230a and a second area 230b in the slide-out state to perform display. For example, the electronic device 200 may display a first image corresponding to the first area 230a and display a second image corresponding to the second area 230b.

According to various embodiments, the slide structure 250 may be coupled to in a sliding manner to be at least partially slid into or slid out from the housing 210. For example, the electronic device 200 may be configured to have a first width W1 from the second side surface 2102 to the fourth side surface 2104 in the slide-in state. According to an embodiment, in the slide-out state, the electronic device 200 may be operated to have a third width W3 greater than the first width W1 by causing the bendable member (e.g., the bendable member 260 of FIG. 4A) slid into the housing 210 to move to a predetermined direction (e.g., the x-axis direction) to have an additional second width W2. Accordingly, in the slide-in state, the flexible display 230 may have a display area substantially corresponding to the first width W1, and in the slide-out state, the flexible display 230 may have an expanded display area substantially corresponding to the third width W3.

According to various embodiments, the slide structure 250 may be operated through a user's manipulation. For example, the electronic device 200 may be switched to the slide-in state or the slide-out state through the user's manipulation of pressing the outer surface of the flexible display 230 to a predetermined direction. In some embodiments, in the electronic device 200, the slide structure 250 may be automatically slid out to a predetermined direction (e.g., x-axis direction) through manipulation of a button (not illustrated) of a locker (not illustrated) exposed outside. In this case, when the slide structure 250 is pressed to a predetermined direction (e.g., the -x axis direction), the slide structure 250 may be controlled to maintain the slide-in state through the locker (not illustrated) while holding a restoring force to be slid out by an elastic member. In some embodiments, the slide structure 250 may be automatically operated by a driving mechanism (e.g., a driving motor, a deceleration module, and/or a gear assembly) disposed in the inner space of the housing 210. According to an embodiment, the electronic device 200 may be configured to control the operation of the slide structure 250 via the driving mechanism when an event for switching to the slide-in/slide-out state of the electronic device 200 is detected via a processor (e.g., the processor 120 in FIG. 1).

In some embodiments, a processor (e.g., the processor 120 of FIG. 1) of the electronic device 200 may control the flexible display 230 to display objects in various ways and to execute an application to correspond to the changed display area of the flexible display 230 according to a slide-in state, a slide-out state, or an intermediate state. According to an embodiment, the processor 120 may divide the display area of the flexible display 230 into a plurality of areas (e.g., a first area and a second area) and may display different images corresponding to respective areas. For example, the processor 120 may display, in the first area, a first image captured by using a first camera (e.g., a wide-angle camera) included in the camera module 180 and may display, in a second area, a second image captured by using a second camera (e.g., a telephoto camera) included in the camera module 180. According to an embodiment, the processor 120 may include a main processor (e.g., the main processor 121 in FIG. 1) and/or an auxiliary processor (e.g., the auxiliary processor 123 in FIG. 1), and an image signal processor (ISP) of the auxiliary processor 123 may at least partially control the camera module 180 to display a plurality of images on a plurality of display areas.

According to an embodiment, the processor 120 of the electronic device 200 may include a sliding sensor (e.g., the sliding sensor 421 of FIG. 4A, the sensor module 176 of FIG. 1, and/or a Hall IC) and may detect the slide-in state, the slide-out state, and/or the intermediate state of the electronic device 200 via the sliding sensor 421. According to an embodiment, the processor 120 may identify the states (e.g., the slide-in state, the slide-out state, and/or the intermediate state) of the electronic device 200 and perform operations that correspond to the states, respectively.

According to various embodiments, the electronic device 200 may include at least one of an input device 203, sound output devices 206 and 207, sensor modules 204 and 217, camera modules 205 and 216 (e.g., the camera module 180 in FIG. 1), a connector port 208, a key input device (not illustrated), or an indicator (not illustrated). In another embodiment, the electronic device 200 may be configured such that at least one of the above-described components is omitted or other components are additionally included.

According to various embodiments, the input device 203 may include a microphone. In some embodiments, the input device 203 may include a plurality of microphones arranged to detect the direction of sound. The sound output devices 206 and 207 may include speakers. The sound output devices 206 and 207 may include an external speaker 206 and a communication receiver 207. As another embodiment, the sound output devices 206 and 207 may include a speaker that is operated without a separate speaker hole (e.g., a piezo speaker).

According to various embodiments, the sensor modules 204 and 217 may generate electrical signals or data values corresponding to the internal operating state of the electronic device 200 or an external environmental state. The sensor modules 204 and 217 may include, for example, a first sensor module 204 (e.g., a proximity sensor or an illuminance sensor) disposed on the front surface 210a of the electronic device 200 and/or a second sensor module 217 (e.g., a heart rate monitoring (HRM) sensor) disposed on the rear surface 210b. According to an embodiment, the first sensor module 204 may be disposed under the flexible display 230 in the front surface 210a of the electronic device 200. According to an embodiment, the first sensor module 204 may include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera modules 205 and 216 may include a first camera module 205 disposed on the front surface 210a of the electronic device 200 and a second camera module 216 disposed on the rear surface 210b. According to an embodiment, the electronic device 200 may include a flash 218 located near the second camera module 216. According to an embodiment, the camera modules 205 and 216 may include one or more lenses, an image sensor, and/or an image signal processor. According to an embodiment, the first camera module 205 may be disposed under the flexible display 230 and may be configured to photograph a subject through a portion of an active area of the flexible display 230. According to an embodiment, the flash 218 may include, for example, a light-emitting diode or a xenon lamp.

According to various embodiments, some of the camera modules 205 and 216 (e.g., the camera module 205), some of the sensor modules 204 and 217 (e.g., the sensor module 204), or the indicator may be arranged to be exposed through the flexible display 230. For example, some camera modules 205, some sensor modules 204, or an indicator may be disposed in the inner space of the electronic device 200 to be in contact with the external environment through a transmission area or an opening perforated in the flexible display 230. According to an embodiment, the area of the flexible display 230, which faces some camera modules 205, may be configured as a transmission area having a predetermined transmittance as a portion of a content display area. According to an embodiment, the transmission area may have a transmittance ranging from about 5% to about 20%. The transmission area may include an area overlapping an effective area (e.g., a field of view area) of some camera modules 205 through which light imaged by an image sensor to generate an image passes. For example, the transmission area of the flexible display 230 may include an area having a lower pixel density and/or a lower wiring density than the surrounding area. For example, the transmission area may replace the above-mentioned opening. For example, some camera modules 205 may include an under-display camera (UDC). As another embodiment, some sensor modules 204 may be disposed to perform the functions thereof in the inner space of the electronic device 200 without being visually exposed through the flexible display 230.

According to various embodiments, the electronic device 200 may include at least one antenna (e.g., the antenna module 197 of FIG. 1) (e.g., an antenna structure). According to an embodiment, the antenna module 197 may include, for example, at least one antenna configured to transmit/receive a signal for wirelessly communicating with an external electronic device (e.g., the electronic device 104 of FIG. 1) and/or a coil antenna (e.g., a wireless power consortium (WPC) antenna, a coil member for wireless charging, and/or a coil member) configured to wirelessly charge an internal battery via an external wireless charging device. According to an embodiment, the electronic device 200 may further include another antenna (not illustrated) disposed in the inner space. According to an embodiment, another antenna may wirelessly transmit/receive power required for charging. According to an embodiment, the antenna module 197 may include at least one of a legacy antenna, a mmWave antenna, a near-field communication (NFC) antenna, a wireless charging antenna, and/or a magnetic secure transmission (MST) antenna.

According to various embodiments, the electronic device 200 may be designed such that the slide structure 250 can be at least partially slid in or slide out, and at the time of being slide in or slid out, the flexible display 230 at least partially disposed on the slide structure 250 maintains a flat state. For example, the electronic device 200 may be implemented such that the edge areas of the flexible display 230 corresponding to the first side surface 2101 and the third side surface 2103 are at least partially fixed to the slide structure 250. The edge areas of the flexible display 230 may be fixed by the slide structure 250, which may help the flexible display 230 to maintain the flat state. The central area of the flexible display 230 (e.g., the central area 430 in FIG. 4A) may have a relatively weaker fixing force than the edge areas, and when the slide structure 250 is slid in or slid out, there is a possibility that a lifting phenomenon of the flexible display 230 may occur in the central area. According to an embodiment, when the slide structure 250 is slid in in or slid out, a rolling (or rotating) operation may occur in the display area of the flexible display 230 to which the bendable member 260 is coupled, and there is a possibility that a lifting phenomenon of the flexible display 230 may occur due to the rolling operation.

According to an embodiment, the electronic device 200 may include magnetic force members disposed to generate an attraction (e.g., magnetic attraction, magnetic force, or electromagnetic force) between the bendable member (e.g., the bendable member 260 of FIG. 4A) at least partially coupled to the slide structure 250 and the base bracket 240 at least partially coupled to a shaft bracket (e.g., the shaft bracket 401 of FIG. 4A). For example, the magnetic force members may include a magnetic force member and a magnetic force response member, and when the magnetic force member is disposed on the bendable member 260, the magnetic force response member may be disposed on the shaft bracket 401. Attraction may be generated between the magnetic force member and the magnetic force response member based on the magnetic force. According to an embodiment, in the electronic device 200, the magnetic force member and the magnetic force response member may be disposed to correspond to a portion where the lifting phenomenon is likely to occur in the flexible display 230 (e.g., the central area 430 of the flexible display 230 of FIG. 4A), and the lifting phenomenon of the flexible display 230 may be prevented (e.g., minimized) by using the attraction between the magnetic force member and the magnetic force response member. For example, when the electronic device 200 is slid in or slid out, the central area of the flexible display 230 (e.g., the central area 430 in FIG. 4A) and the shaft bracket 401 may be brought into close contact with each other based on the attraction.

FIG. 4A is a front perspective view of a slide structure 250 according to various embodiments of the disclosure.

Referring to FIG. 4A, a flexible display 230 located on the front surface 210a of an electronic device (e.g., the electronic device 200 of FIG. 2A) is illustrated. According to an embodiment, the flexible display 230 may be at least partially coupled to a bendable member 260 and a slide structure 250. According to an embodiment, the slide structure 250 may perform a rolling (e.g., rotating) operation at least partially in an area where the bendable member 260 is disposed in response to a slide-in or slide-out operation of the electronic device 200. For example, during the slide-in or slid-out operation of the electronic device 200, the use of gear elements 410 may assist in the rolling operation of the bendable member 260. According to an embodiment, the gear elements 410 may be at least partially coupled to the shaft bracket 401 of the electronic device 200. For example, gear teeth may be formed at opposite end portions of the bendable member 260, and the gear elements 410 may be coupled in the form of being engaged with the gear teeth. According to an embodiment, the use of gear elements 410 may assist in the rolling operation of the bendable member 260 during the slide-in or slide-out operation of the electronic device 200 and may at least partially fix the opposite ends of the bendable member 260. The central area 430 of the flexible display 230 may have a relatively weaker fixing force than the opposite ends of the flexible display 230, and during the slide-in or slide-out operation of the electronic device 200, the lifting phenomenon of the central area 430 may occur.

According to an embodiment, to correspond to the central area 430 of the flexible display 230, a magnetic force member (e.g., a magnetic force generating member) may be disposed on the bendable member 260 and a magnetic force response member may be disposed on the shaft bracket 401. A magnetic attraction may occur between the magnetic force member on the bendable member 260 and the magnetic force response member on the shaft bracket 401. According to an embodiment, during the slide-in or slide-out operation of the electronic device 200, the bendable member 260 and the shaft bracket 401 may be maintained in the close contact state with each other, and the lifting phenomenon of the central area 430 of the flexible display 230 may be prevented (e.g., minimized).

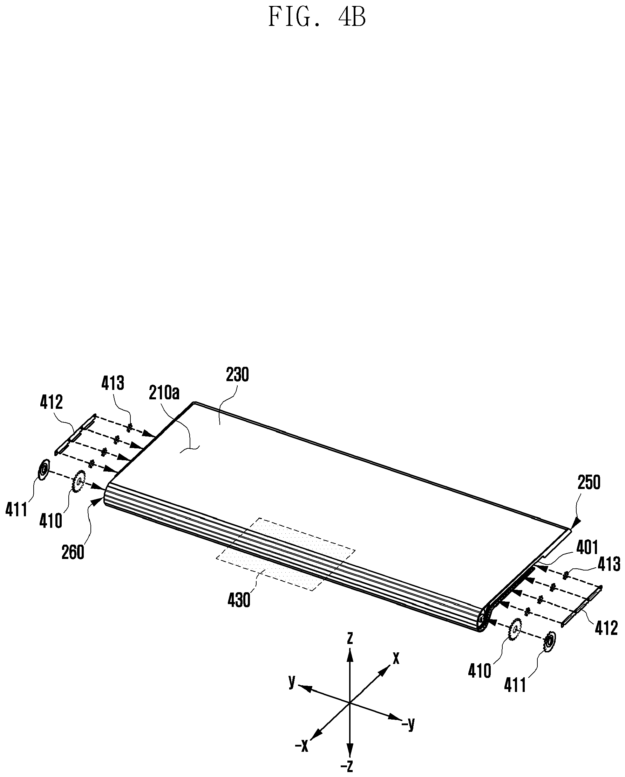

FIG. 4B is an exemplary view illustrating a process of assembling gear elements 410 to perform a rolling operation of the slide structure 250 according to various embodiments of the disclosure.

Referring to FIG. 4B, the flexible display 230 located on the front surface 210a of an electronic device (e.g., the electronic device 200 of FIG. 2A) is illustrated. According to an embodiment, the flexible display 230 may be at least partially coupled to the bendable member 260 and the slide structure 250. According to an embodiment, the slide structure 250 may perform a rolling (e.g., rotating) operation at least partially in an area where the bendable member 260 is disposed in response to a slide-in or slide-out operation of the electronic device 200.

According to an embodiment, gear elements 410 configured to assist in the slide-in or slide-out operation of the electronic device 200 may be disposed at opposite ends of the flexible display 230. According to an embodiment, the gear elements 410 may be at least partially coupled to the shaft bracket 401 of the electronic device 200 and may support the rolling (e.g., rotating) operation of the bendable member 260. According to an embodiment, the gear elements may be protected from an external impact by gear covers 411. According to an embodiment, auxiliary gear elements 413 configured to assist the gear elements 410 may also be disposed at the opposite ends of the flexible display 230 and may be protected from an external impact by auxiliary gear covers 412.

According to an embodiment, the gear elements 410 may be disposed at the opposite ends of the flexible display 230 and may at least partially fix the flexible display 230. The central area 430 of the flexible display 230 may have a relatively weaker fixing force than the opposite ends of the flexible display 230, and during the slide-in or slide-out operation of the electronic device 200, the lifting phenomenon of the central area 430 may occur.

According to an embodiment, to correspond to the central area 430 of the flexible display 230, a magnetic force member (e.g., a magnetic force generating member) may be disposed on the bendable member 260 and a magnetic force response member may be disposed on the shaft bracket 401. A magnetic attraction may occur between the magnetic force member on the bendable member 260 and the magnetic force response member on the shaft bracket 401. According to an embodiment, during the slide-in or slide-out operation of the electronic device 200, the bendable member 260 and the shaft bracket 401 may be maintained in the close contact state with each other, and the lifting phenomenon of the central area 430 of the flexible display 230 may be prevented (e.g., minimized).

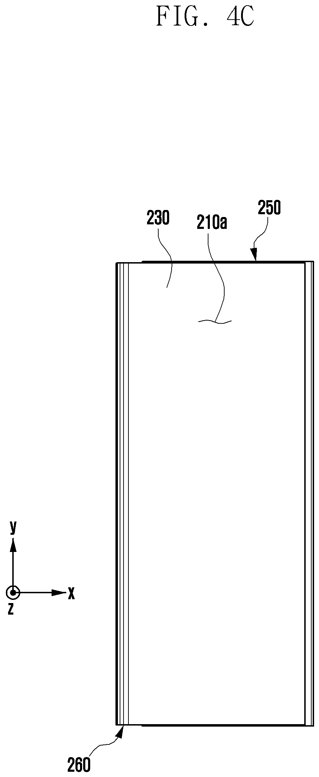

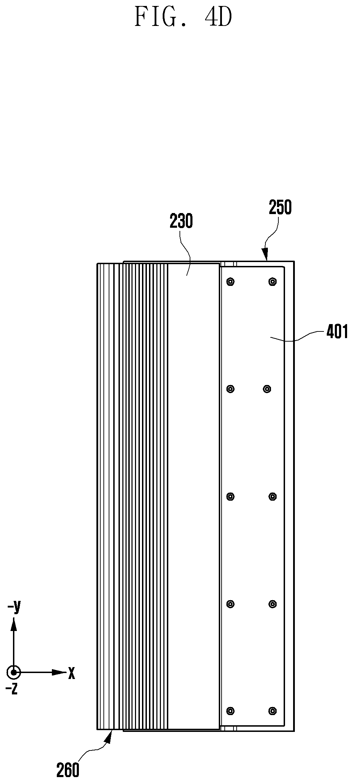

FIG. 4C is an exemplary view illustrating the front surface of the slide structure 250 according to various embodiments of the disclosure. FIG. 4D is an exemplary view illustrating the rear surface of the slide structure 250 according to various embodiments of the disclosure.

Referring to FIG. 4C, the front surface of the slide structure 250 may be the same as the front surface 210a of the electronic device (e.g., the electronic device 200 of FIG. 2A), and the flexible display 230 may be placed on the front surface of the slide structure 250.

According to an embodiment, the flexible display 230 may be disposed in a form at least partially bent based on the bendable member 260. The flexible display 230 may perform a sliding operation by a predetermined distance along a first direction (e.g., the x-axis direction). According to an embodiment, when the flexible display 230 performs the sliding operation, the bendable member 260 may at least partially perform a rolling (e.g., rotating) operation.

Referring to FIG. 4D, on the rear surface of the slide structure 250, the shaft bracket 401 may be at least partially disposed, and a partial display area of the flexible display 230 attached to the bendable member 260 may be disposed. According to an embodiment, when the flexible display 230 performs a sliding operation along the first direction (e.g., the x-axis direction), the partial area of the flexible display 230 attached to the bendable member 260 may move from the rear surface to the front surface of the structure 250. The bendable member 260 may perform a rolling (e.g., rotating) operation.

FIG. 5A is an exemplary view illustrating a process of assembling the shaft bracket 401 and the base bracket 240 partially disposed on the slide structure 250 according to various embodiments of the disclosure.

Referring to FIG. 5A, the shaft bracket 401 may be at least partially disposed on the rear surface of the slide structure 250. According to an embodiment, in an electronic device (e.g., the electronic device 200 of FIG. 2A), the gear elements 410 may be disposed on the shaft bracket 401 to correspond to opposite ends of the slide structure 250, and a rolling (e.g., rotating) operation by the bendable member 260 may be performed. The gear elements 410 may assist in the rolling operation.

Referring to FIG. 5A, the base bracket 240 may be designed in a form of protecting the opposite ends of the slide structure 250 from an external impact by a first side surface (e.g., the first side surface 2101 in FIG. 2A) and a third side surface (e.g., the third side 2103 in FIG. 2A).

The shaft bracket 401 may include bolt assembly portions 511 to which one or more bolts 512 are fastened, respectively. The base bracket 401 may include holes through which the one or more bolts 512 pass, respectively, and the holes may be provided to correspond to the positions of the bolt assembly portions 511, respectively. According to an embodiment, the shaft bracket 401 and the base bracket 401 may be coupled by using the one or more bolts 512.

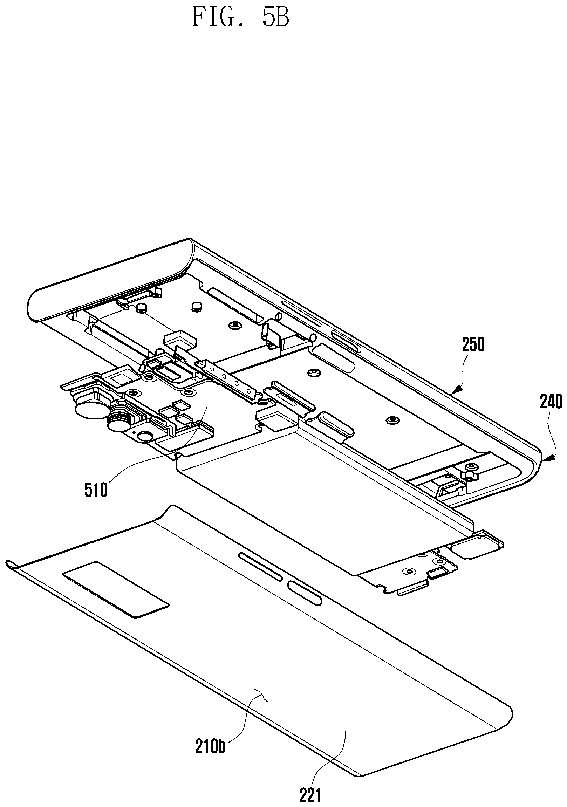

FIG. 5B is an exemplary diagram illustrating a process of assembling the base bracket 240, a printed circuit board 510, and a rear surface cover 221 according to various embodiments of the disclosure.

Referring to FIG. 5B, the base bracket 240 is illustrated in a state in which the slide structure 250 is disposed after the assembly process illustrated in FIG. 5A has been performed. FIG. 5B illustrates a process of assembling the base bracket 240, the printed circuit board 510, and the rear surface cover 221 on the rear surface (e.g., the rear surface 210b of FIG. 2A) of the electronic device (e.g., the electronic device 200 of FIG. 2A). For example, the base bracket 240 may include a recess structure based on the shape of the printed circuit board 510, and after the printed circuit board 510 is assembled, the rear surface cover 221 may be assembled.

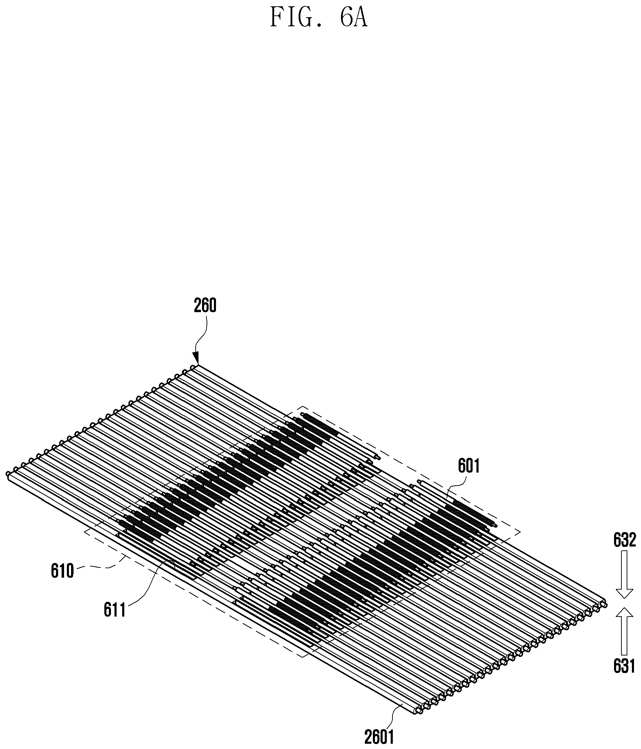

FIG. 6A is an exemplary view illustrating magnetic force members 601 arranged on a multi-bar structure (e.g., a multi-bar assembly or a multi-joint hinge module) included in the bendable member 260 according to various embodiments of the disclosure.

Referring to FIG. 6A, the bendable member 260 may be constituted with a multi-bar structure including one or more multi-bar units 2601. The one or more multi-bar units 2601 may be implemented with the same standard and may be spaced apart from each other at equal intervals. The bendable member 260 may be attached to a flexible display (e.g., the flexible display 230 of FIG. 2A) to correspond to a bendable area of the flexible display. For example, the flexible display 230 may be bent and perform a rolling (e.g., rotating) operation based on the bendable member 260.

A recess structure 611 may be designed in the central area 610 of the bendable member 260 at a position where one or more magnetic force members 601 (e.g., magnets) are disposed, and the one or more magnetic force members 601 may be disposed based on the recess structure 611. For example, the recess structure 611 may be designed in the form of furrows (e.g., grooves) based on the size and shape of the magnetic force members 601, and the magnetic force members 601 may be designed to be at least partially embedded in the recess structure 611.

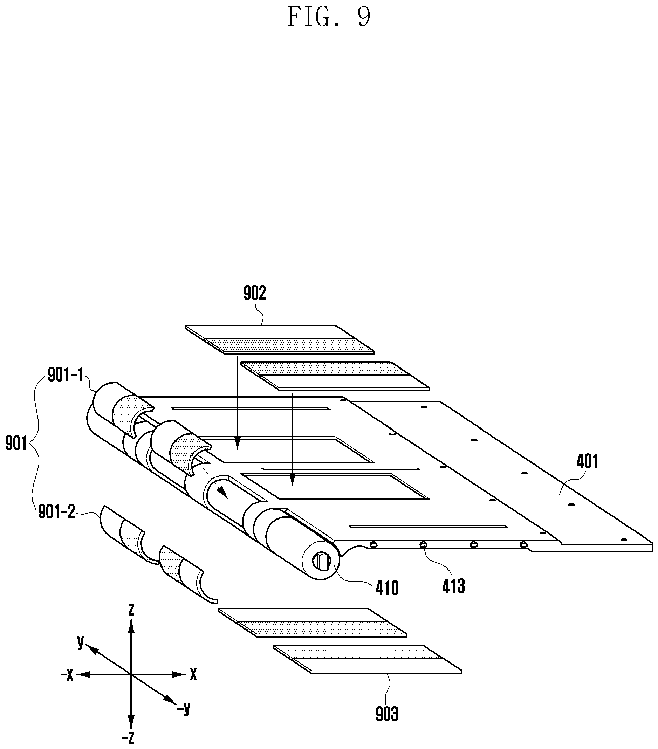

According to an embodiment, the magnetic force members 601 may at least partially be in close contact with magnetic force response members (e.g., the magnetic force response members 901, 902, and 903 of FIG. 9), which are at least partially disposed on the shaft bracket (e.g., the shaft bracket 401 of FIG. 4A), based on attraction. For example, magnetic force may occur between the magnetic force members 601 and the magnetic force response members, and attraction may occur due to the magnetic force. The magnetic force members 601 and the magnetic force response members may at least partially maintain the close contact state with each other based on the attraction therebetween. According to an embodiment, with reference to the bendable member 260, the shaft bracket 401 may be disposed along a first direction 631 and the flexible display 230 may be disposed along a second direction 632.

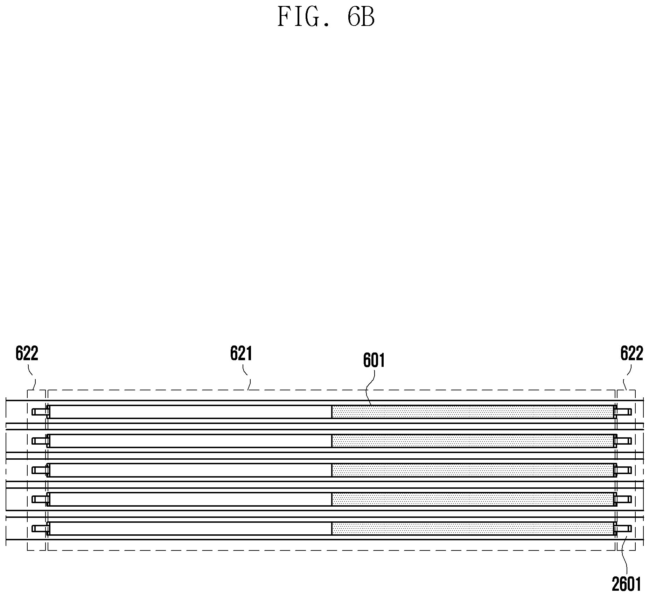

FIG. 6B is an enlarged exemplary view illustrating magnetic force members 601 disposed in a multi-bar structure according to various embodiments of the disclosure.

Referring to FIG. 6B, the one or more magnetic force members 601 may be inserted into the one or more multi-bar units 2601. According to an embodiment, the one or more magnetic force members 601 may be divided into a first area (e.g., a central area 621) and second areas (e.g., edge areas 622), and the first area 621 and the second areas 622 may be implemented in different shapes. In order to perform a rolling (e.g., rotating) operation, the one or more magnetic force members 601 may be implemented in a cylindrical shape in both the first area 621 and the second areas 622. For example, the diameter of the cylinders corresponding to the first area 621 may be greater than the diameter of the cylinders corresponding to the second areas 622. According to an embodiment, the one or more magnetic force members 601 may include a magnet generating magnetic force. According to another embodiment, the one or more magnetic force members 601 may be implemented as members that do not generate magnetic force based on the second areas 622.

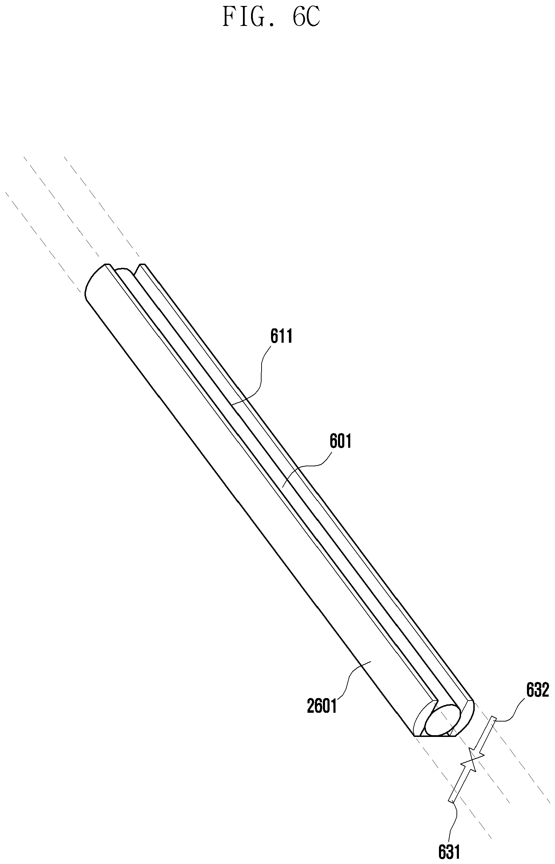

FIG. 6C is an enlarged exemplary view illustrating a magnetic force member 601 disposed in a multi-bar unit 2601 according to various embodiments of the disclosure.

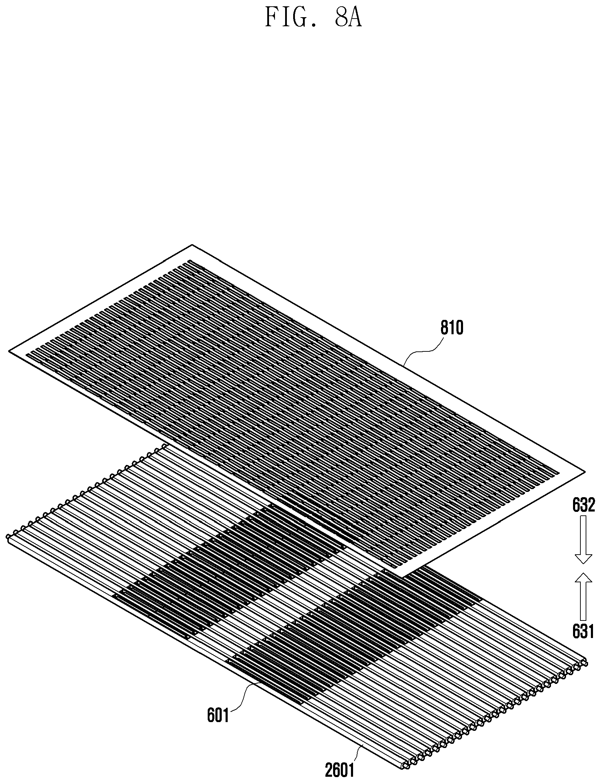

Referring to FIG. 6C, a portion of the central area (e.g., the central area 621 of FIG. 6B) in at least one multi-bar unit 2601 is illustrated. According to an embodiment, the bendable member 260 may include at least one multi-bar unit 2601, and at least one magnetic force member 601 may be disposed in the at least one multi-bar unit 2601. For example, on the at least one multi-bar units 2601, a shaft bracket (e.g., the shaft bracket 401 in FIG. 4A) may be disposed to correspond to the first direction 631, and a flexible display (e.g., the flexible display 230 of FIG. 2A) may be disposed to correspond to the second direction 632. According to an embodiment, the at least one magnetic force response member (e.g., the magnetic force response members 901, 902, and 903 of FIG. 9) may be disposed on the shaft bracket 401, and the at least one magnetic force member 601 may maintain the close contact state with the at least one magnetic force response member based on attraction. According to an embodiment, between the at least one multi-bar unit 2601 and the flexible display 230 along the second direction, a multi-bar support member (e.g., the multi-bar support member 810 in FIG. 8A) configured to prevent the separation of the at least one magnetic force member 601 may be disposed.

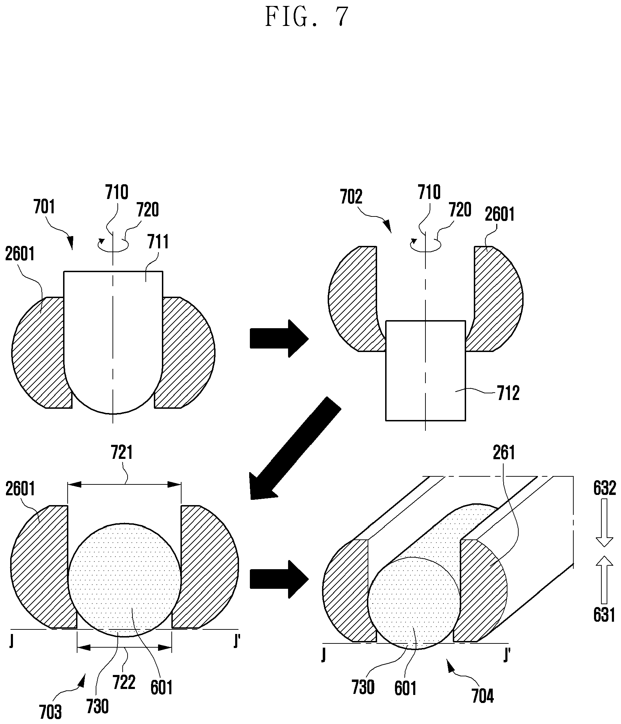

FIG. 7 is an exemplary view illustrating a manufacturing process performed in disposing a magnetic force member 601 in a multi-bar unit 2601 according to various embodiments of the disclosure.

Referring to FIG. 7, in operations 701 and 702, an opening formed in at least one multi-bar unit 2601 by a first jig 711 and a second jig 712. For example, the first jig 711 and the second jig 712 may have different shapes and sizes. The first jig 711 may include a ball-shaped cutting structure (e.g., a cutting tool) having a circular cross section, and the second jig 712 may include a cutting structure having a quadrilateral cross section. Operations 701 and 702 may include a manufacturing operation in which the first jig 711 and the second jig 712 rotate at a set speed (720) around a rotation axis 710 passing through the center of the multi-bar unit 2601. The at least one multi-bar unit 2601 may be at least partially punched by the first jig 711 and the second jig 712. In the at least one multi-bar unit 2601, the size 722 of a first opening formed to correspond to the first direction 631 and the size 721 of a second opening formed to correspond to the second direction 632 may be different from each other. For example, the size 722 of the first opening formed to correspond to the first direction 631 may be smaller than the size 721 of the second opening formed to correspond to the second direction 632.

In operation 703, the at least one magnetic force member (e.g., the magnetic force members 601 in FIG. 6A) may be inserted into the at least one multi-bar unit 2601 along the second direction 632 through the second opening and may be at least partially seated due to the first opening. For example, the second opening may have a diameter larger than the diameter of the at least one magnetic force member 601, and the first opening may have a diameter smaller than the diameter of the at least one magnetic force member 601. According to an embodiment, a partial area 730 of the at least one magnetic force member 601 may be exposed outside along the second direction 632 beyond line J-J' corresponding to one surface of the at least one multi-bar unit 2601.

In operation 704, the at least one magnetic force member 601 may perform a rolling (e.g., rotating) operation while maintaining the state of being inserted into the at least one multi-bar unit 2601. For example, in the at least one magnetic force member 601, the partial area 730 exposed outside with reference to line J-J' may be an area that is at least partially in close contact with a magnetic force response member (e.g., the magnetic force response members 901, 902, and 903 of FIG. 9). According to an embodiment, in response to the rolling (e.g., rotating) operation of the flexible display (e.g., the flexible display 230 of FIG. 2A), the at least one magnetic force member 601 may perform the rolling operation while maintaining the close contact state with the magnetic force response member.

According to an embodiment, the magnetic force response member (e.g., the magnetic force response members 901, 902, and 903 in FIG. 9) , which is at least partially disposed on the shaft bracket (e.g., the shaft bracket 401 of FIG. 4A), may be disposed to correspond to the first direction 631 with reference to the at least one multi-bar unit 2601. The at least one magnetic force member 601 may perform a rolling (e.g., rotation) operation while maintaining the close contact state with each other based on the attraction generated between the at least one magnetic force member and the at least one magnetic force response member. For example, while the partial area 730 of the at least one magnetic force member 601 maintains the close contact state with the magnetic force response member 901, 902, or 903, the at least one magnetic force member 601 may perform a rolling operation. According to an embodiment, the flexible display (e.g., the flexible display 230 of FIG. 2A) may be disposed to correspond to the second direction 632 with reference to the at least one multi-bar unit 2601. Between the at least one multi-bar unit 2601 and the flexible display 230, a multi-bar support member (e.g., the multi-bar support member 810 of FIG. 8A or a multi-bar base) configured to prevent separation of the at least one magnetic force member 601 may be disposed.

According to an embodiment, the at least one magnetic force member 601 may be disposed to at least partially protrude along the second direction 632 from the outer surface of the at least one multi-bar unit 2601. For example, the portion protruding outside from the at least one magnetic force member 601 may come into close contact with the at least one magnetic force response member at least partially disposed on the shaft bracket (e.g., the shaft bracket 401 of FIG. 4A) of the electronic device (e.g., the electronic device 200 of FIG. 2A). According to an embodiment, the magnetic force member 601 and the magnetic force response member may generate attraction (e.g., attractive force) by magnetic force and may maintain the close contact state with each other by mutual attraction.

FIG. 8A is an exemplary view illustrating a multi-bar support member 810 at least partially disposed on a bendable member 260 according to various embodiments of the disclosure.

Referring to FIG. 8A, one or more magnetic force members 601 may be inserted into one or more multi-bar units 2601 included in the bendable member 260. In the bendable member 260, a multi-bar support member 810 may be disposed to correspond to a second direction 632 such that the one or more inserted magnetic force members 601 are not separated outside. For example, the multi-bar support member 810 may include one or more openings formed at predetermined intervals to support the bending operation of the bendable member 260. The multi-bar support member 810 may be implemented to at least partially cover the one or more magnetic force members 601. According to an embodiment, the multi-bar support member 810 may be implemented based on a material that does not generate magnetic force (e.g., magnetism or magnetic attraction).

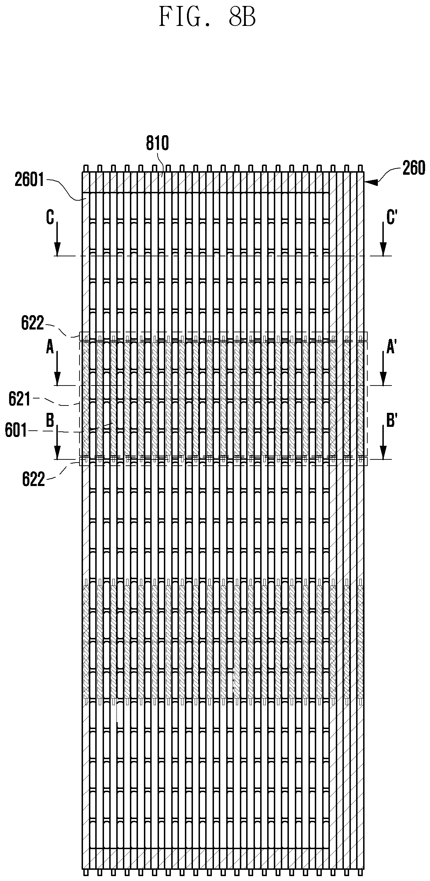

FIG. 8B is an exemplary view illustrating the front surface of the multi-bar support member 810 disposed on the bendable member 260 according to various embodiments of the disclosure. FIG. 8B is a view obtained by seeing the multi-bar support member 810, which is attached to the bendable member 260 in FIG. 8A, in the second direction 632.

Referring to FIG. 8B, the bendable member 260 configured with one or more multi-bar units 2601 is at least partially covered by the multi-bar support member 810. According to an embodiment, the one or more multi-bar units 2601 may be covered with the multi-bar support member 810 in a state in which one or more magnetic force members 601 are inserted into the one or more multi-bar units 2601. For example, the multi-bar support member 810 may be disposed to at least partially overlap the bendable member 260 and may be disposed to at least partially cover the one or more multi-bar units 2601. The multi-bar support member 810 may be disposed to at least partially cover an area where the one or more magnetic force members 601 are inserted into the one or more multi-bar units 2601 to prevent the one or more magnetic force members 601 inserted into the bendable member 260 from being separated outside. The multi-bar support member 810 may have one or more openings corresponding to spaces, each of which is located between every adjacent ones of the one or more multi-bar units 2601.

Referring to FIG. 8B, the one or more magnetic force members 601 may be divided into a first area (e.g., the central area 621 of FIG. 6B) and second areas (e.g., the edge areas 622 of FIG. 6B). For example, a magnet generating magnetic force may be disposed in the first area 621. The first area 621 may be an area in which attraction is generated between the magnets and a magnetic force response member disposed on a shaft bracket (e.g., the shaft bracket 401 in FIG. 4A). For example, rotation shafts configured to rotate the one or more magnetic force members 601 may be disposed in the second areas 622.

According to an embodiment, the multi-bar support member 810 may have one or more openings corresponding to areas where the bendable member 260 is bent. According to an embodiment, the multi-bar support member 810 may at least partially fix the disposed positions of the one or more multi-bar units 2601 included in the bendable member 260.

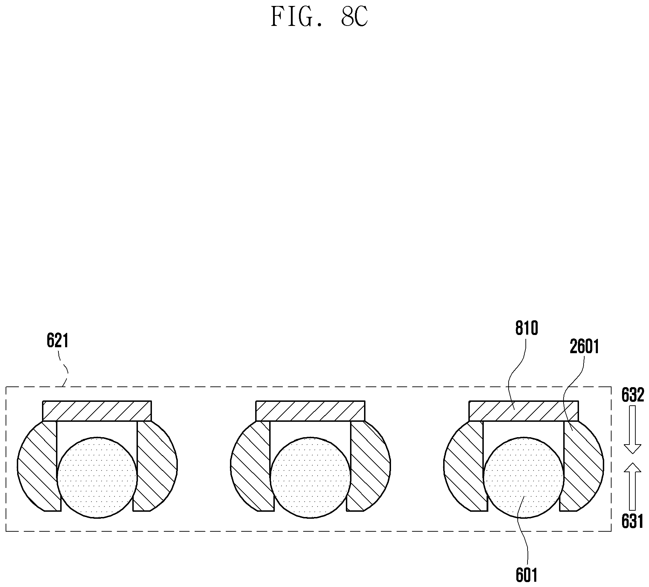

FIG. 8C is a cross-sectional view taken along line A-A' in FIG. 8B according to various embodiments of the disclosure.

FIG. 8C is a cross-sectional view of a first area (e.g., the central area 621 of FIG. 6B) of the bendable member 260 in a state in which the bendable member 260 and the multi-bar support member 810 are overlapped. The bendable member 260 may include one or more multi-bar units 2601, and the one or more multi-bar units 2601 may have one or more magnetic force members 601 inserted therein. Referring to FIG. 8C, although three multi-bar units 2601 are illustrated, the number is not limited to three. The number of multi-bar units may be determined based on the bendable areas of the bendable member 260.

According to an embodiment, the multi-bar support member 810 may be disposed to at least partially cover the one or more multi-bar units 2601 to prevent the one or more magnetic force members 601 inserted into the one or more multi-bar units 2601 from being separated outside.

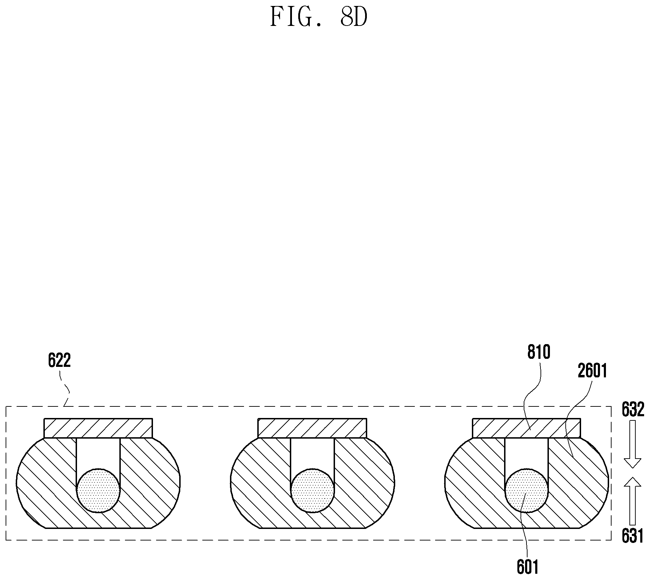

FIG. 8D is a cross-sectional view taken along line B-B' in FIG. 8B according to various embodiments of the disclosure.

FIG. 8D is a cross-sectional view of a second area (e.g., an edge area 621 of FIG. 6B) of the bendable member 260 in a state in which the bendable member 260 and the multi-bar support member 810 are overlapped. The bendable member 260 may include one or more multi-bar units 2601, and to correspond to the second areas 621, the one or more multi-bar units 2601 may implement rotation shafts configured to rotate the one or more magnetic force members 601. For example, in the at least one multi-bar units 2601, furrows (e.g., grooves), into which the rotation shafts of the one or more magnetic forces 601 are inserted, respectively, may be implemented to correspond to the second areas 621.

According to an embodiment, the multi-bar support member 810 may be disposed to at least partially cover the one or more multi-bar units 2601 to prevent the one magnetic force members 601 inserted into the one or more multi-bar units 2601 from being separated outside.

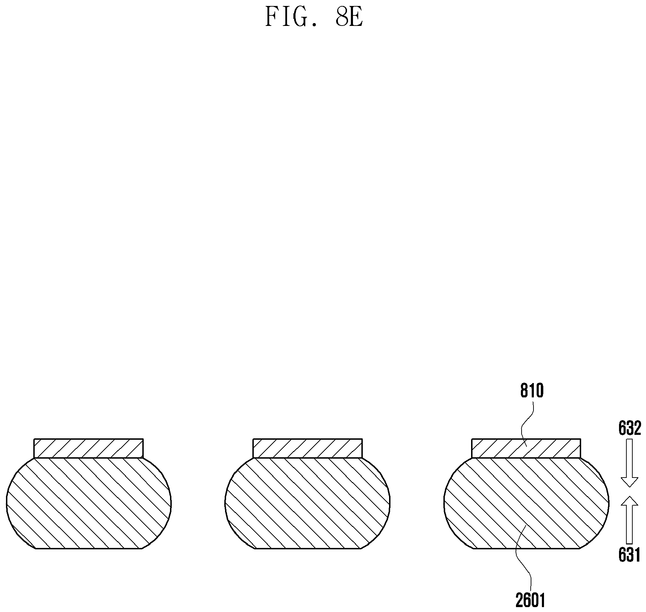

FIG. 8E is a cross-sectional view taken along line C-C' in FIG. 8B according to various embodiments of the disclosure.

FIG. 8E illustrates a cross-sectional view of an area in which the one or more magnetic force members 601 are not disposed, in a state in which the bendable member 260 and the multi-bar support member 810 are overlapped. According to an embodiment, the multi-bar support member 810 may be disposed to overlap one or more multi-bar units 2601 included in the bendable member 260, and the one or more multi-bar units 2601 may be at least partially fixed. For example, the multi-bar support member 810 may support the one or more multi-bar units 2601 such that the spaces, each of which is located between every adjacent ones of the one or more multi-bar unitd 2601, are maintained constant.

FIG. 9 is an exemplary views illustrating magnetic force response members at least partially disposed on a shaft bracket according to various embodiments of the disclosure.

According to an embodiment, an electronic device (e.g., the electronic device 200 of FIG. 2A) may include a shaft bracket (e.g., the shaft bracket 401 in FIG. 4A) configured to at least partially support a slide structure (e.g., the slide structure 250 of FIG. 4A) when the slide structure 250 is slid into or slid out to a predetermined direction (e.g., an x-axis direction) and by a predetermined reciprocating distance. Referring to FIG. 5A, the shaft bracket 401 may be coupled to a base bracket (e.g., the base bracket 240 of FIG. 5A).

Referring to FIG. 9, in the electronic device 200, one or more magnetic force response members 901, 902, and 903 may be disposed on the shaft bracket 401. According to an embodiment, the one or more magnetic force response members 901, 902, and 903 may be disposed to correspond to a bendable area of a bendable member (e.g., the bendable member 260 of FIG. 4A) coupled to one end of the slide structure 250. For example, one or more magnetic force response members 901, 902, and 903 may be disposed to correspond to an area where the bendable member 260 is bent. According to an embodiment, based on the central area (e.g., the central area 430 in FIG. 4A) of the bendable member 260, the one or more magnetic force response members 901, 902, and 903 may be disposed to correspond on the front surface (e.g., the z-axis direction), a side surface (e.g., an area where the bendable member 260 is bent), and/or the rear surface (e.g., the -z-axis direction) of the shaft bracket 401.

Referring to FIG. 9, the shaft bracket 401 may include gear elements 410 and auxiliary gear elements 413 disposed to correspond to opposite ends of the bendable member 260. The use of the gear elements 410 and the auxiliary gear elements 413 may assist in the rolling (e.g., rotating) operation of the bendable member 260. Referring to FIG. 9, on the shaft bracket 401, a first curved magnetic force response members 901-1 and/or second curved magnetic force members 901-2 may be disposed to correspond to an area where the bendable member 260 is bent. For example, the magnetic force response members may include curved magnetic force response members 901 implemented in a curved shape and/or flat magnetic force response members 902 and 903 implemented in a flat shape. One or more of the curved magnetic force response members 901 and/or the flat magnetic force response members 902 and 903 may be disposed as the magnetic force response members based on the shape of the shaft bracket 401. For example, the magnetic force response members 901 may include a magnetic force response material (e.g., iron or a magnet) in which attraction is generated by a magnet.

According to an embodiment, the bendable member 260 may include one or more multi-bar units (the multi-bar units 2601 of FIG. 6A) into which one or more magnetic force members (e.g., the magnetic force members 601 in FIG. 6A) may be inserted. According to an embodiment, a magnetic attraction may occur between the one or more magnetic force members 601 and the one or more magnetic force response members 901, 902, and 903. The one or more magnetic force members 601 and the one or more magnetic force response members 901, 902, and 903 may maintain the close contact state with each other based on the attraction. For example, when the magnetic force members 601 serve as an N pole, the magnetic force response members 901, 902, and 903 may serve as an S pole, or *vice versa.* According to an embodiment, the magnetic force members 601 and the magnetic force response members 901, 902, and 903 may include materials generating mutual attraction.

According to an embodiment, the electronic device 200 may performs a slide-in operation in which the slide structure 250 is at least partially slid into the housing, and a slid-out operation in which the slide structure 250 is at least partially slid out. According to an embodiment, the bendable member 260 may perform a rolling (e.g., rotating) operation based on the shaft bracket 401 in response to the slide-in operation and the slide-out operation. According to an embodiment, during the rolling operation, the magnetic force members 601 inserted into the multi-bar units 2601 included in the bendable member 260 may maintain a close contact state by attraction with the magnetic force response members 901, 902, and 903 at least partially disposed on the shaft bracket 401. According to an embodiment, the electronic device 200 may prevent (e.g., minimize) the lifting phenomenon of the flexible display (e.g., the flexible display 230 of FIG. 2A) even when the slide-in operation and slide-out operation of the slide structure 250 are performed. According to an embodiment, the flexible display 230 may maintain the close contact state with the shaft bracket 401 by attraction between the magnetic force members 601 and the magnetic force response members 901, 902, and 903.

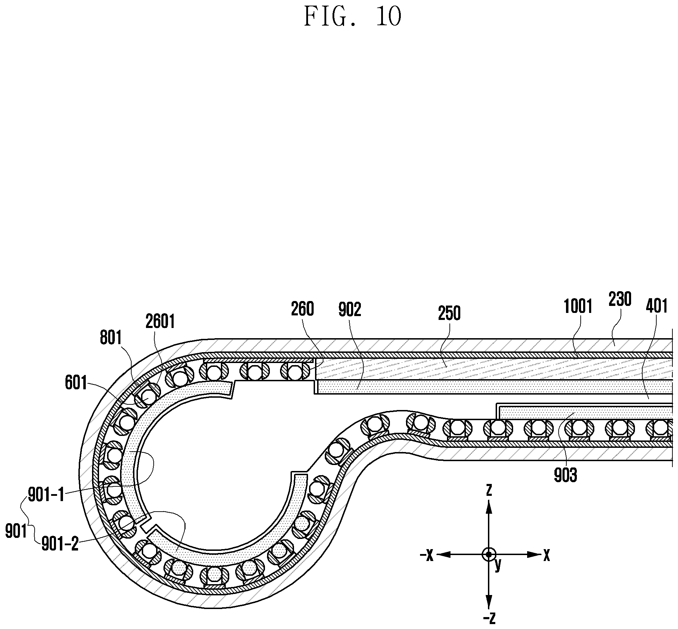

FIG. 10 is a cross-sectional view of a slide structure illustrating a coupling structure between magnetic force response members disposed on a bendable member and magnetic force response members disposed on a shaft bracket according to various embodiments of the disclosure.

According to one embodiment, an electronic device (e.g., the electronic device 200 in FIG. 2A) may include a slide structure (e.g., the slide structure 250 of FIG. 4A) movable to a predetermined direction (e.g., x-axis direction) and by a predetermined reciprocating distance, a bendable member (e.g., the bendable member 260 of FIG. 4A, a hinge rail, a multi-bar assembly, at least one multi-bar unit, and/or a multi-joint hinge module) coupled to one end of the slide structure 250 and at least partially bent in a slide-in state, a flexible display (e.g., the flexible display 230 of FIG. 4A or an expandable display) disposed to be supported by the slide structure 250 and the bendable member 260, and/or a shaft bracket (e.g., the axis bracket 401 of FIG. 4A) configured to at least partially support the slide structure 250 and the bendable member 260 inside the electronic device 200. According to one embodiment, the flexible display 230 may be at least partially bonded to the slide structure 250 by using an adhesive member 1001 (e.g., adhesive tape). For example, when the slide structure 250 performs the slide-in operation and the slide-out operation, the flexible display 230 may perform the slide-in operation and the slide-out operation together with the slide structure 250.

According to one embodiment, the bendable member 260 may be disposed to correspond to an area where the flexible display 230 is bent and may be configured based on one or more multi-bar units 2601. According to one embodiment, the one or more multi-bar units 2601 may include one or more magnetic force members 601, and the one or more magnetic force members 601 may generate attraction with one or more magnetic force response member (e.g., the first curved magnetic force response members 901-1, the second curved magnetic force response members 901 -2, and the flat magnetic force response members 902 and 903 in FIG. 9) disposed on the shaft bracket 401. According to one embodiment, on the shaft bracket 401, the one or more magnetic force response members 901, 902, and 903 may be at least partially disposed to correspond to an area where the bendable member 260 is bent. For example, attraction may be generated by magnetic force between the magnetic force members 601 and the magnetic force response members 901, 902, and 903, which may maintain a close contact state with each other. When the magnetic force members 601 and the magnetic force response members 901, 902, and 903 maintain the close contact state, a minimum clearance (e.g., a gap) through which a bendable member 260 is capable of performing a rolling operation may be maintained between the magnetic force members 601 and the magnetic force response members 901, 902, and 903. According to an embodiment, a phenomenon in which the flexible display 230 of the electronic device 200 is lifted may be minimized based on the attraction generated between the magnetic force members 601 and the magnetic force response members 901, 902, and 903. According to an embodiment, a multi-bar support member 810 may be disposed on the one or more multi-bar units 2601 to prevent the one or more magnetic force members 601 from being separated outside (e.g., to the direction where the flexible display 230 is located). For example, the multi-bar support member 810 may be disposed to at least partially cover openings into which the magnetic force members 601 are inserted in the one or more multi-bar units 2601. The multi-bar support member 810 may be disposed to at least partially overlap the bendable member 260.

According to an embodiment, in performing a slide-in operation and/or a slide-out operation of the slide structure 250, the electronic device 200 is capable of preventing (e.g., minimizing) the lifting phenomenon of the flexible display 230 based on attraction generated between the one or more magnetic force members 601 included in the bendable member 260 and the magnetic force response members 901, 902, and 903 disposed on the bracket 260.

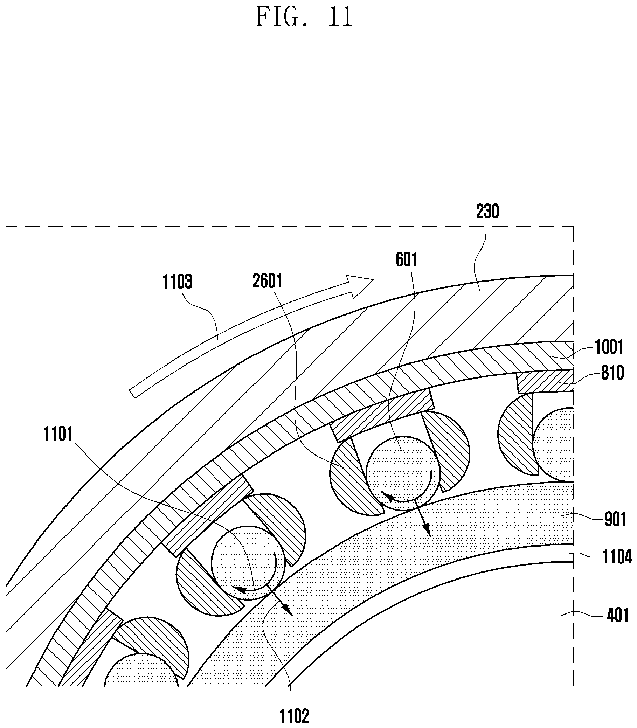

FIG. 11 is an exemplary view illustrating an operation in which magnetic force members are also rolled in response to a rolling operation of a bendable member according to various embodiments of the disclosure.

According to one embodiment, an electronic device (e.g., the electronic device 200 in FIG. 2A) may perform a slide-in operation and a slide-out operation for a slide structure (e.g., the slide structure 250 in FIG. 4A), and in response to the slide-in operation and the slide-out operation, the flexible display (e.g., the flexible display 230 in FIG. 2A) may perform a rolling operation.

According to one embodiment, in the electronic device 200, the bendable member (e.g., the bendable member 260 in FIG. 4) including one or more multi-bar units (e.g., the multi-bar units 2601 in FIG. 6A) may be disposed to correspond to a bent area in the flexible display 230. According to an embodiment, one magnetic force members 601 may be inserted into the one or more multi-bar units 2601 included in the bendable member 260. According to an embodiment, on the at least one multi-bar unit 2601, a multi-bar support member 810, which at least partially covers openings into which the magnetic force members 601 are inserted, is disposed. According to an embodiment, the flexible display 230 may be at least partially bonded to the multi-bar support member 810 by using an adhesive member 1001 (e.g., adhesive tape).

According to an embodiment, when the electronic device 200 performs slide-in operation and a slide-out operation, the flexible display 230 may perform a rolling operation 1103, and the one or more magnetic force members 601 may also perform a rolling operation 1101.

According to one embodiment, the one or more magnetic force members 601 may generate attraction 1102 by magnetic force with at least one magnetic force response member 901 at least partially disposed on a shaft bracket (e.g., the shaft bracket 401 of FIG. 4A). For example, the at least one magnetic force response member 901 may be bonded to the shaft bracket 401 by using an adhesive member 1104 (e.g., adhesive tape). According to an embodiment, the magnetic force members 601 and the magnetic force response member 901 may maintain a close contact state with each other based on the attraction 1102. For example, the magnetic force members 601 may be implemented in a cylinder (e.g., column) shape to simultaneously perform the rolling operation 1101 in response to the rolling operation 1103 of the flexible display 230. For example, during the rolling operation 1101, the magnetic force members 601 may perform a rolling operation (e.g., a rolling motion or a rolling operation 1101) while maintaining a state of being at least partially close contact with the magnetic force response member 901. The magnetic force members 601 may each perform a rolling operation while maintaining a state in which a partial area (e.g., the partial area 730 in FIG. 7) is at least partially in close contact with the magnetic force response member 901 (e.g., the state in which attraction is generated between the magnetic force members 601 and the magnetic force response member 901). According to one embodiment, even when the flexible display 230 performs the rolling operation 1103, while the magnetic force members 601 and the magnetic force response member 901 maintain the close contact state based on the attraction 1102, the one or more magnetic force members 601 may perform the rolling operation 1101.

According to one embodiment, even when the electronic device 200 performs the rolling operation 1103 for the flexible display 230, it is possible to prevent (e.g., minimize) the lifting phenomenon of the flexible display 230. According to one embodiment, the flexible display 230 may perform the rolling operation 1133 while maintaining a close contact state with the shaft bracket 401 by the attraction 1102 between the magnetic force members 601 and the magnetic force response member 901.

According to various embodiment, an electronic device (e.g., the electronic device 200 in FIG. 2A) may include a housing (e.g., the shaft bracket 401 in FIG. 4A) including an inner space, a slide structure (e.g., the slide structure 250 in FIG. 4A) coupled to the housing to be slidable along a first direction, a bendable member (e.g., the bendable member 260 in FIG. 4A) connected to the slide structure 250 and disposed to at least partially face the housing, a flexible display (e.g., the flexible display 230 in FIG. 2A) disposed to be supported by at least a portion of the slide structure 250 and at least a portion of the bendable member 260 and configured to be moved together with the bendable member 260 according to a sliding operation of the slide structure 250, and a display support structure disposed between the bendable member 260 and the housing, wherein the display support member includes at least one magnetic force member (e.g., the magnetic force members 601 in FIG. 6A) at least partially disposed in the bendable member, and at least one magnetic force response member (e.g., the magnetic force response members 901, 902, and 903 in FIG. 9) disposed at a position where the magnetic force response member responds to magnetic force of the magnetic force member 601. In a slide-in state, the flexible display 230 may be at least partially accommodated in the inner space not to be seen from outside through at least a portion of the bendable member 260, and the flexible display 230 may maintain a state in which the magnetic force member 601 and the magnetic force response member 901 are at least partially in contact with each other during the sliding operation.

According to an embodiment, the bendable member 260 may include one or more multi-bar units (e.g., the one or more multi-bar units 2601 of FIG. 6A) rotatably connected to each other, and the one or more multi-bar units 2601 may be disposed to be spaced apart from each other at equal intervals.

According to an embodiment, the one or more multi-bar units 2601 may include a recess structure (e.g., the recess structure 611 in FIG. 6A) into which the at least one magnetic force member 601 is inserted, and the at least one magnetic force member 601 may be inserted based on the recess structure 611.

According to an embodiment, the electronic device may further include a multi-bar support member (e.g., the multi-bar support member 810) configured to at least partially cover the recess structure 611 to correspond to the recess structure 611 of the one or more multi-bar units 2601.

According to an embodiment, the multi-bar support member 810 may include a material that does not generate magnetic force.

According to an embodiment, the multi-bar support member 810 may be implemented based on an arrangement structure of the one or more multi-bar units 601, and may be disposed to at least partially overlap the one or more multi-bar units 601.

According to an embodiment, the multi-bar support member 810 may be at least partially bonded to the flexible display 230 by using an adhesive member (e.g., the adhesive member 1001 in FIG. 10).

According to an embodiment, the at least one magnetic force member 601 may be disposed to perform a rolling operation according to the sliding operation of the slide structure 250 and may be disposed to at least partially protrude from the outer surface of the bendable member 260 toward the housing, and the at least one magnetic force member 601 may be divided into a first area (e.g., the central area 621 in FIG. 6B) that protrudes from the outer surface and a second area (e.g., the edge areas 622 in FIG. 6B) including a rotation shaft configured to rotate the at least one magnetic force member 601 rather than the first area 621.

According to an embodiment, the at least one magnetic force member 601 may be disposed to correspond to a central area based on the one or more multi-bar units 2601.

According to an embodiment, the at least one magnetic force member 601 may include a magnet that generates magnetic force, and the at least one magnetic force response member 901, 902, and 903 may include a magnet or a metal member that responds to the magnetic force of the magnet.

According to an embodiment, based on magnetic force generated between the at least one magnetic force member 601 and the at least one magnetic force response member 901, 902, and 903, attraction is generated and the at least one magnetic force member 601 and the at least one magnetic force response member 901, 902, and 903 may maintain a close contact state.

According to an embodiment, the housing may include a first surface facing outward, a second surface facing an inner space opposite to the first surface, and a curved side surface interconnecting the first surface and the second surface, and the at least one magnetic force response member 901, 902, and 903 may be disposed on at least one of the first surface, the second surface, or the side surface, and may be implemented in a flat shape (e.g., the flat magnetic force response members 902 and 903 in FIG. 9) corresponding to the first surface and the second surface and implemented in a curved shape (e.g., the curved magnetic force response member 901 in FIG. 9) corresponding to the side surface.

According to an embodiment, the housing may be at least partially fixed to a base bracket (e.g., the base bracket 240 in FIG. 5A) of the electronic device 200, and when the slide structure 250 is slid in in a direction opposite to the first direction, at least a partial area of the bendable member 260 may be slid into an inner space defined between the housing and the base bracket 240.

According to an embodiment, the electronic device may further include at least one gear element (e.g., the gear element 410 in FIG. 4A) configured to perform a sliding operation of the slide structure 250 at opposite ends of the bendable member 260.

According to an embodiment, the electronic device may further include a multi-bar support member 810 configured to at least partially cover the at least one magnetic force member 601 in the display support structure. The one or more multi-bar units 2601 may include a recess structure into which the at least one magnetic force member 601 is inserted, and based on the recess structure, the at least one magnetic force member 601 may be inserted, and the recess structure may be at least partially covered by the multi-bar support structure 810.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the disclosure disclosed in this specification and drawings only present a specific example in order to easily describe the technical contents according to an embodiment of the disclosure and to help an understanding of the embodiments of the disclosure, and they do not intend to limit the scope of the embodiments of the disclosure. Accordingly, all changes or modifications derived from the technical idea of various embodiments of the disclosure in addition to the embodiments described herein should be construed as being included in the scope of various embodiments of the disclosure without departing from the scope of the disclosure.

## Claims

1. An electronic device comprising:
a housing comprising an inner space;
a slide structure coupled to the housing to be slidable along a first direction;
a bendable member connected to the slide structure and disposed to at least partially face the housing;
a flexible display disposed to be supported by at least a portion of the slide structure and at least a portion of the bendable member and configured to be moved together with the bendable member according to a sliding operation of the slide structure; and
a display support structure disposed between the bendable member and the housing, the display support member comprising
at least one magnetic force member at least partially disposed in the bendable member, and
at least one magnetic force response member disposed at a position in the housing where the magnetic force response member responds to magnetic force of the magnetic force member,
wherein, in a slide-in state, the flexible display may be at least partially accommodated in the inner space not to be seen from outside through at least a portion of the bendable member, and
wherein the flexible display maintains a state in which the magnetic force member and the magnetic force response member are at least partially in contact with each other during the sliding operation.

2. The electronic device of claim 1, wherein the bendable member comprises one or more multi-bar units rotatably connected to each other, and
wherein the one or more multi-bar units are disposed to be spaced apart from each other at equal intervals.

3. The electronic device of claim 2, wherein the one or more multi-bar units comprise a recess structure into which the at least one magnetic force member is inserted, and the at least one magnetic force member is inserted based on the recess structure.

4. The electronic device of claim 3, further comprising a multi-bar support member configured to at least partially cover the recess structure to correspond to the recess structure of the one or more multi-bar units.

5. The electronic device of claim 4, wherein the multi-bar support member comprises a material that does not generate magnetic force.

6. The electronic device of claim 4, wherein the multi-bar support member is implemented based on an arrangement structure of the one or more multi-bar units, and is disposed to at least partially overlap the one or more multi-bar units.

7. The electronic device of claim 4, wherein the multi-bar support member is at least partially bonded to the flexible display by using an adhesive member.

8. The electronic device of claim 3, wherein the at least one magnetic force member is disposed to perform a rolling operation according to the sliding operation of the slide structure and is disposed to at least partially protrude from an outer surface of the bendable member toward the housing, and
wherein the at least one magnetic force member is divided into a first area that protrudes from the outer surface and a second area comprising a rotation shaft configured to rotate the at least one magnetic force member rather than the first area.

9. The electronic device of claim 3, wherein the at least one magnetic force member is disposed to correspond to a central area based on the one or more multi-bar units.

10. The electronic device of claim 1, wherein the at least one magnetic force member comprises a magnet that generates magnetic force, and the at least one magnetic force response member comprises a magnet or a metal member that responds to the magnetic force of the magnet.

11. The electronic device of claim 1, wherein, based on magnetic force generated between the at least one magnetic force member and the at least one magnetic force response member, attraction is generated and the at least one magnetic force member and the at least one magnetic force response member maintain a close contact state.

12. The electronic device of claim 1, wherein the housing comprises a first surface facing outward, a second surface facing an inner space opposite to the first surface, and a curved side surface interconnecting the first surface and the second surface, and
wherein the at least one magnetic force response member is disposed on at least one of the first surface, the second surface, or the side surface, and is implemented in a flat shape corresponding to the first surface and the second surface and implemented in a curved shape corresponding to the side surface.

13. The electronic device of claim 12, wherein the housing is at least partially fixed to a base bracket of the electronic device, and when the slide structure is slid in in a direction opposite to the first direction, at least a partial area of the bendable member is slid into an inner space defined between the housing and the base bracket.

14. The electronic device of claim 1, further comprising at least one gear element configured to perform a sliding operation of the slide structure at opposite ends of the bendable member.

15. The electronic device of claim 1, further comprising a multi-bar support member configured to at least partially cover the at least one magnetic force member in the display support structure,
wherein the one or more multi-bar units comprise a recess structure into which the at least one magnetic force member is inserted, and based on the recess structure, the at least one magnetic force member is inserted, and the recess structure is at least partially covered by the multi-bar support structure.
